# EUROPÄISCHE PATENTSCHRIFT

(11) **EP 0 602 262 B1**
(45) Veröffentlichungstag und Bekanntmachung des Hinweises auf die Patenterteilung: **12.03.1997**
(21) Anmeldenummer: 92121283.3
(22) Anmeldetag: 15.12.1992
(51) Int. Cl.: B29C 44/20

(54) **Bahnförmige Schaumstoffplatten aus Polyolefinen**
Continuous polyolefin foam panels
Panneaux de mousse en résine de polyoléfine continus

(43) Veröffentlichungstag der Anmeldung: 22.06.1994
(73) Patentinhaber: SCRIPTORIA N.V., B-3830 Wellen (BE)
(72) Erfinder: Fiddelaers, Martin, B-3600 Genk (BE); Swennen, Leon, Dipl.-Ing., B-3740 Bilzen (BE)
(74) Vertreter: Meys, Hildegard, Dr.rer.nat.

(56) Entgegenhaltungen:
- EP-A- 0 498 327
- WO-A-92/19439
- DE-A- 3 926 446
- GB-A- 2 102 808
- US-A- 4 097 210
- PATENT ABSTRACTS OF JAPAN vol. 7, no. 20 (M-188)(1165) 26. Januar 1983 & JP-A-57 174 225 (TOKYO SHIBAURA DENKI) 26. October 1982

## Beschreibung

Die Erfindung bezieht sich auf bahnförmige Schaumstoff-Platten, die in relativ geringer Plattendicke aus treibmittelhaltigen Polyolefin-Formmassen, insbesondere solchen Polyethylen- und Polypropylen-Kunststoffmassen, durch Extrudieren, Aufschäumen und Expandieren dieser Massen hergestellt werden und insbesondere als Verpackungs- und Isoliermaterial vielfältig Verwendung finden.

Es ist relativ schwierig, gleichförmige Schaumstoffprodukte geringer Dicke in Bahnen- und Plattenform in für Verpackungs- und Isoliermaterialien erforderlichen relativ grossen Breiten herzustellen. Dazu wurden spezielle Vorrichtungen und Verfahren entwickelt, wie beispielsweise in der US-PS 4 323 528 (Collins) beschrieben. Um eine für industriellen Betrieb brauchbare kontinuierliche oder diskontinuierliche Arbeitsweise zu sichern, müssen dabei neben speziell aufeinander abgestimmten Arbeitsverhältnissen von Druck, Temperatur und Extrusionsgeschwindigkeit auch die Mengenverhältnisse an Polymermasse, Treib- bzw. Blähmittel und gegebenenfalls vorhandenen sonstigen Zusätzen in dem zu verarbeitenden Einsatzmaterial exakt aufeinander abgestuft eingestellt sein.

Die Ergebnisse waren zufriedenstellend, solange als Treib- und Blähmittel Halogenkohlenwasserstoffe verwendet wurden. Aus Umweltschutz-Erwägungen ist der Einsatz solcher Halogenkohlenwasserstoffe nun nicht mehr erwünscht bzw. nicht mehr erlaubt. Als Ersatz für Halogenkohlenwasserstoffe werden heutzutage bei diesen Verfahren halogenfreie Kohlenwasserstoffe, insbesondere Butan, Isobutan und/oder Propan und/oder CO₂ als Treib- und Blähmittel bei der Fertigung von dünnen Polyolefin-Schaumstoffbahnen eingesetzt. Es ergibt sich dabei die Schwierigkeit, daß nach der Schaumstoffbildung diese Treib- und Blähmittel nicht in der gewünschten Weise aus dem aufgeschäumten Material entweichen. Die gebildeten Schaumstoffbahnen müssen in einer nachgeschalteten "Reifestufe" von den Treib- und Blähmitteln möglichst weitgehend befreit werden. Dies kann geschehen durch Lagern und Ruhenlassen über einen längeren Zeitraum, etwa einige Wochen, bei erhöhter Temperatur oder Umgebungstemperatur. Man kann auch eine Wärmestabilisierung vornehmen und dazu beispielsweise die Schaumstoffbahnen in einer dem Extruder nachgeschalteten Einrichtung z.B. etwa 30 Minuten lang auf etwa 40 - 50^{o}C erwärmen, z.B. in einem auf diese Temperatur eingestellten Ofen fahren. Abgesehen davon, daß diese Maßnahmen zeit- und energieaufwendig sind, hat es sich gezeigt, daß dennoch ein hoher Restgehalt an Kohlenwasserstoff-Treibmittel in dem fertigen Schaumstoffmaterial verbleibt, was sich ungünstig auf dessen thermische Stabilität und das visuelle Erscheinungsbild der Oberfläche, der sogenannten Haut, auswirkt.

Aus der WO-A-92 19439, auf die sich der Oberbegriff der unabhängigen Ansprüche stützt, ist ein Verfahren bekannt, bei dem solche mit halogenfreiem Treib- und Blähmittel verschäumte Polyolefin -Schaumstoffmassen extrudiert und nachdem das Schaumstoffmaterial verfestigt und von dem verfestigten Materialstrang abgelängt worden ist, perforiert werden. Obwohl die vollständige Durchlöcherung des Schaumstoffmaterials bevorzugt wird, ist auch eine mögliche Teilperforierung erwähnt.

Der Erfindung liegt die Aufgabe zugrunde, ein Schaumstoffbahnen- und -plattenmaterial aus mittels halogenfreien Kohlenwasserstoffen und/oder CO₂, insbesondere Butan, gewünschtenfalls im Gemisch mit CO₂, verschäumten Polyolefinmassen in Vorschlag zu bringen, das unmittelbar nach seiner Fertigung einen um mehr als 30% verringerten Treibmittelgehalt hat und gute mechanische Dauereigenschaften aufweist.

Diese Aufgabe wird erfindungsgemäß durch den Gegenstand des Anspruchs 1 gelöst.

Wenn dünne Schaumstoffplatten, etwa in Dicken von 50 mm bis 100 mm, in einer Vorrichtung nach einen Verfahren wie aus der US-PS 4,323,528 bekannt, hergestellt werden und dabei anstelle von Fluorchlorkohlenwasserstoffen (FCKW) als Treibmittel z.B. Butan verwendet wird, weisen die fertigen Schaumstoffplatten, wie gefunden wurde, bei sonst gleichen Arbeitsbedingungen andere physikalische Eigenschaften auf als die mit FCKW als Treibmittel gefertigten Platten. Insbesondere die thermische Stabilität entspricht nicht den geforderten Standard-Bedingungen.
Es wurde festgestellt, daß diese Nachteile dadurch verursacht werden, daß das Austreten der halogenfreien Kohlenwasserstofftreibmittel aus dem verschäumten Material erschwert ist. Es bildet sich wahrscheinlich durch die Schockwirkung des Temperaturunterschiedes von etwa 105 - 115^{o}C im Spritzkopf vor der Düse und 20^{o}C im Umgebungsraum, in den die Schaumstoffmasse ausgestoßen wird, beim Aufschäumen des extrudierten Materials eine Oberflächenhaut in Art einer sogenannten Elefantenhaut aus, die möglicherweise das Heraustreten des halogenfreien Kohlenwasserstoff-Treibmittels aus der erstarrenden Schaummasse behindert. Dementsprechend liegt der im verfestigten, gebrauchsfertigen Schaumstoff-Plattenmaterial verbliebene Treibmittelgehalt relativ hoch und vermindert sich im Verlauf von mehreren Wochen nicht soweit, daß die erforderliche thermische Stabilität erreicht wird. Die thermischen Eigenschaften diese Materials sind unzureichend.

Abhilfe dieser Unzulänglichkeiten konnte dadurch erreicht werden, daß das extrudierte erfindungsgemäße Schaumstoff-Plattenmaterial 1 bis 3 Stunden nach der Extrusion, unmittelbar nachdem es sich verfestigt und seine Eigenstabilität erreicht hat, nadelperforiert wird.

Das läßt sich in einfacher Weise durchführen dadurch, daß man in Reihe mit dem Extruder, diesem nachgeordnet, eine Vorrichtung zum Einstechen von Perforationen in das stabilisierte Schaumstoffplatten-Produkt vorsieht. Einstech-Vorrichtungen, die zu diesem Zweck eingesetzt werden können, sind bekannt. Man kann beispielsweise eine aus zwei Walzen bestehende Vorrichtung benutzen, bei der die Walzen parallel zueinander angeordnet sind und gegenläufig mit gleicher Umfangsgeschwindigkeit angetrieben werden, und wobei eine der Walzen mit einem Gummibelagversehen und die andere Walze mit Nadeln bestückt ist und der Achsenabstand der Walzen veränderbar eingestellt werden kann. Das Schaumstoffplatten-Produkt wird über die Gummiwalze geführt, und mit Hilfe der Nadeln an der Gegenwalze wird die Nadelperforation des Platten-Produktes vorgenommen. Es kann auch mit solchen bekannten Vorrichtungen erfindungsgemäß nadelperforiert werden, bei denen die Nadeln an einer vertikal und gegebenenfalls horizontal bewegbaren Platte befestigt sind, die parallel zur Ebene der Schaumstoffplatte angeordnet ist, und die mit einer der Abzugsgeschwindigkeit der Schaumstoffbahn entsprechenden Horizontalgeschwindigkeit gefahren wird, wobei gleichzeitig durch Vertikalbewegung in Richtung auf die Schaumstoffbahn die Nadelperforierung erfolgt.

Die Eindringtiefe der Nadeln in die Schaumstoffplatte, die 60% bis 96% der Plattendicke beträgt, läßt sich variieren durch entsprechende Einstellung der Achsenabstände bei den Walzen bzw. der Hubhöhe der Nadelplattenvorrichtung. Die Größe der Einstichlöcher beim Perforieren läßt sich durch die Stärke der verwendeten Nadeln steuern. Es werden zweckmäßig Nadeln verwendet, deren Spitzen eine Länge haben, die der maximalen Eindringtiefe in das Schaumstoffplatten-Material entspricht.
Wenn Nadeln mit konischer Ausbildung der Nadelspitzen verwendet werden, lassen sich Größe und Tiefe der Perforierungslöcher durch die Einstellung der Einstechwalze bzw. -platte steuern.

Es hat sich als vorteilhaft erwiesen, das erfindungsgemäße Schaumstoff-Bahnenprodukt mit möglichst tiefen Nadelperforationen und möglichst dicht vernadelt auszubilden. Dichte Vernadelung und geringe Tiefeneinstechung ergeben vergleichbare Produkte mit solchen, die entsprechend geringe Vernadelung und maximale Einstechtiefe aufweisen. Praktisch hat sich erfindungsgemäß ein solches Schaumstoffbahnen-Produkt dann als besonders vorteilhaft erwiesen, wenn dessen Vernadelungsdichte mindestens 4000 Nadeln pro m² der Plattenfläche ausmacht und triangulare Nadeln benutzt werden.

Erfindungsgemäße Schaumstoffplatten und -bahnen können in den üblichen Abmessungen vorliegen. Bekanntlich kann Plattenmaterial aus Polyolefinschaumstoff in Stärken (Dicken) von 0,5 mm bis 150 mm und in Breiten bis zu 2 m in kontinuierlicher oder diskontinuierlicher Arbeitsweise hergestellt werden. Es können ringförmige Extruderdüsen mit entsprechend kleiner oder größerer Ringspaltbreite benutzt werden, durch die die geschmolzene schäumbare viskose Masse extrudiert wird.

Das sich dabei bildende rohrförmige Schaumstoff-Gebilde wird dann über einen zylinderförmigen Hülsendorn als Haltevorrichtung abgezogen und verstreckt und zu Bahnform aufgeschnitten, sobald es seine Eigenfestigkeit besitzt.
Es können wahlweise zum Extrudieren Flachdüsen benutzt werden und das sich bildende Schaumstoffprodukt zunächst zwischen zwei Bändern als Haltevorrichtung abgezogen und auf die gewünschte Dimension eingestellt werden. Nach 2 bis 2,5 m Abzugsweg kann dann auf ein Transportband abgelegt und darauf über etwa 15 m Streckenlänge weiter abgezogen werden, bis das Produkt seine Eigenfestigkeit gewonnen hat.

Die erfindungsgemäß vorgesehene Vernadelung sollte in jedem Fall erst dann erfolgen, wenn das Schaumstoffplatten- bzw. -bahnenmaterial ausreichende Eigenstabilität gewonnen hat. Allerdings ist es erforderlich, dann alsbald die Vernadelungsperforierung vorzunehmen. Es hat sich gezeigt, daß nach einer längeren Stabilisierungsperiode eine Vernadelungsperforierung ohne wesentlichen Effekt auf die Änderung des Restgehaltes an in dem ausgeschäumten Produkt verbliebenem halogenfreiem Kohlenwasserstoff-Treibmittel bleibt.

Es wurde gefunden, daß eine Zeitspanne von 1 bis 3 Stunden nach der Extrusion des Schaumstoffplatten-Produktes für die Vernadelungsperforierung die gewünschten Ergebnisse bringt. Der Vernadelungsvorgang soll nicht später als 3 Stunden nach der Extrusion vorgenommen werden, da andernfalls keine optimalen Ergebnisse erzielt werden.

Nach dem Vernadeln wird das erfindungsgemäße perforierte Schaumstoffplatten-Produkt, sofern es nicht bereits in Form von Einzelplatten, wie sie bei der batchweisen Fertigung anfallen, vorliegt, entweder in Form von Bahnenmaterial gelagert und verschickt, oder es wird auf dem vorgesehenen Verwendungszweck entsprechende Abmessungen, Längen und ggf. Breiten, zugeschnitten und in Form solcher Zuschnitte der weiteren Verwendung zugeführt.

Die erfindungsgemäß erreichten Vorteile zeigen sich speziell dann, wenn mit Massen auf Basis von unvernetzten Polyolefinen gearbeitet wird und Schaumstoffprodukte mit geschlossener Zellstruktur im Schaumstoff gefertigt werden. Bei Produkten aus offenzelligem Schaumstoff lassen die mechanischen und physikalischen Gebrauchseigenschaften zu wünschen übrig.

Es empfiehlt sich darüber hinaus, erfindungsgemäß Schaumstoffplatten-Produkte mit Dicken vorteilhaft bis zu 150 mm vorzusehen, da - wie gefunden wurde - bei erfindungsgemäßen Schaumstoffplatten-Produkten, deren Dicke größer als etwa 150 mm ist, die thermische Stabilität nachläßt, so daß sie nur für solche Einsatzzwecke optimal sind, bei denen sie keinen wesentlichen Temperatureinflüssen unterliegen.

Als Polyolefine können sowohl Homopolymere als auch Copolymere aus entsprechenden C₂ - C₈ - Monomeren, wie Ethylen, Propylen, Butylen usw. für die erfindungsgemäßen Zwecke eingesetzt werden, die nach beliebigen bekannten Verfahren, Hochdruck-, Mitteldruck- oder Niederdruck-Polymerisation, polymerisiert sein können. Vorteilhaft sind die Polymere unvernetzte Linearpolymere.

Als die Zellbildung und/oder die Zellengröße und -verteilung in dem Schaumprodukt regelnde Zusätze können alle für diese Zwecke bekannten und gebräuchlichen Substanzen bei der Herstellung erfindungsgemäßer Schaumstoffplatten-Produkte mitverwendet werden. Solche Substanzen sind beispielsweise Ester von Fettsäuren, wie Stearate, die in Form von z.B. Zinkstearat oder auch als Glycerinester von Stearinsäure für diese Zwecke unter verschiedenen Handelsproduktbezeichnungen käuflich erworben werden können (Beispiel: "ATMOS", "Radiasurf"). Es werden in der Regel auch Keimbildungsmittel als Zusatz mitverwendet, beispielsweise Talkum oder CaO, die ebenfalls als Handelsprodukte auf dem Markt für die vorliegenden Zwecke erhältlich sind, beispielsweise unter den Handelsnamen "MISTROV ZSC" und "Talc de Luzenac".

Die erfindungsgemäßen Schaumstoffprodukte können Porengrößen von 20 bis 36 CPI (Anzahl der Zellen pro Inch, gemessen mittels einer tabellierten Lupe an der Schnittfläche von Materialprobenschnitten), Schaumstoff-Dichten von ca. 15 bis 65 kg/m³, Druckfestigkeiten von 0,06 - 0,150 N/mm² bei 50% Kompression Druckeinwirkung nach DIN 53577 (gemessen bei vierter Kompression) und Druckverformungsrest von 10 - 45% bei 50% Kompression während 22 Stunden und 2 Stunden Erholung nach DIN 53572 und thermische Stabilität von < -10% bei 24 Stunden bei 70^{o}C nach ASTM 3575 F aufweisen.

Es wurde gefunden, daß diese physikalischen Eigenschaften bei erfindungsgemäß nadelperforierten Produkten gegenüber bisher bekannten mit halogenfreien Kohlenwasserstoffen bzw. halogenhaltigen Kohlenwasserstoffen und Gemischen mit CO₂ als Treib- und Blähmittel geschäumten Produkten verbessert oder gleichgut waren.

### Beispiel 1

Ein Gemisch aus 100 Gewichtsteilen granulatförmiges Hochdruckpolyethylen (LDPE), 1 Gewichtsteil Zinkstearat und 0,5 Gewichtsteilen feinteiliges Talkum (oder CaO, oder ZnO) wurden kontinuierlich in den Einfüllstutzen eines Einschnecken-Extruders der in US-PS 4,323,528 (Collins) beschriebenen Bauart eingegeben und darin während der Förderung mittels der Extruderschnecke zu einer homogenen viskosen Masse aufgeschmolzen. Der aufgeschmolzenen Masse wurde auf ihrem Förderweg zum Extruderspritzkopf unter Druck Butan-Treibmittel zugeführt und eingemischt.
Die mit dem Treibmittel gleichförmig durchmischte geschmolzene Masse wurde auf eine gegenüber der Schmelztemperatur niedrigere Temperatur abgekühlt und durch eine ringförmige Spritzdüse unter Druck ins Freie ausgespritzt. Die ringförmig ausgespritzte schäumende viskose Masse wurde über eine vor der Spritzdüse außen angeordnete zylinderförmige Hülse, die als Formdorn diente, geführt und darauf verstreckt und abgekühlt.
Nachdem sich die geschäumte Masse auf ihrem Abzugsweg stabilisiert und ausreichende Eigenfestigkeit angenommen hatte, wurde das rohrförmige Schaumstoff-Gebilde am Ende des Dorns aufgeschnitten und als Schaumstoffbahnen-Produkt durch eine Einstechwalzen-Anordnung hindurch geführt. Mittels der Einstechwalzen-Vorrichtung wurde das Schaumstoffplatten-Produkt nadelperforiert.
In den nachstehenden Tabellen 1 und 2 sind die Verfahrensparameter und die Produkt-Eigenschaften im Detail angegeben. Die Werte für das "Vergleichsbeispiel 1" wurden an einer Probe des wie zuvor beschrieben gefertigten Schaumstoffplatten-Produktes ermittelt, die nach dem Aufschneiden des rohrförmigen Schaumstoff-Gebildes hinter dem Formdorn, aber vor dessen Zuführung in die Einstechwalzen-Anordnung genommen worden war.

### Beispiel 2

Es wurde wie in Beispiel 1 beschrieben gearbeitet, jedoch wurde anstelle einer ringförmigen Spritzdüse eine Flachdüse verwendet, durch die die schäumende Masse ins Freie extrudiert wurde. Die extrudierte schäumende Masse wurde zunächst über eine Abzugsstrecke von etwa 2 Meter Länge zwischen 2 Bändern geführt, die parallel zueinander in einem der Dicke der herzustellenden Schaumstoffplatte entsprechenden Abstand voneinander horizontal umliefen; danach wurde das Schaumstoff-Produkt noch über eine Wegstrecke von weiteren ca. 15 m Länge auf einem Band vorwärts transportiert. Die Abzugsgeschwindigkeit betrug 1 - 7 m pro Minute.
Nachdem so das gewonnene Schaumstoffplatten-Produkt seine Eigenfestigkeit erreicht hatte, wurde es durch eine wie in Beispiel 1 angegebene Einstechwalzen-Anordnung hindurchgeführt und darin nadelperforiert.
In den nachstehenden Tabellen 1 und 2 sind die Verfahrensparameter und die Produkt-Eigenschaften im Detail angegeben. Die Werte für das "Vergleichsbeispiel 2" wurden an einer Probe des wie zuvor beschrieben gefertigten Schaumstoffplatten-Produktes ermittelt, die nach dem Abnehmen des Schaumstoffplatten-Gebildes von dem Transportband, aber vor der Zufürhung des Schaumstoffplatten-Produktes in die Einstechwalzen-Anordnung genommen worden war.

### Beispiel 3

Es wurde im wesentlichen wie in den vorhergehenden Beispielen beschrieben gearbeitet, jedoch wurde nicht kontinuierlich sondern diskontinuierlich, batchweise, gespritzt. (Accumulationsprozess), Dazu wurde die durchmischte und geschmolzene Masse einer der Extruderschnecke nachgeschalteten Haltekammer zugeführt, in welcher Temperatur und Druck so aufeinander abgestuft sind, daß das Aufschäumen der Mischung verhindert wird. Aus der Haltekammer wird die darin enthaltene Gemischmenge mittels eines Kolbens getaktet, in zeitlichen Abständen, durch die Spritzdüse ausgestoßen. Mit Ausspritzmengen von 2000 bis 4500 kg/Stunde, die mittels Spritztakten von 3 bis 12 Sekunden bei Haltekammerkapazitäten von 3 bis 25 kg erreicht werden, wurden Schaumstoffplatten erzeugt, die Längen von 0,5 bis 12 Meter hatten.
Die weiteren Produkt-Eigenschaften sind in den nachstehenden Tabellen 1 und 2 angegeben. Die Werte für das "Vergleichs-beispiel 3" wurden an einer Probe einer wie zuvor beschrieben gefertigten Schaumstoffplatte ermittelt, die nach der Abnahme von dem Transportband aber vor der Zuführung in die Einstechwalzen-Anordnung abgenommen worden war.

Erfindungsgemäße Schaumstoffplatten und -bahnen haben den Vorteil, daß sie sich entsprechend den vorgegebenen Spezifikationen hinsichtlich thermischer Stabilität direkt einfach fertigen lassen.
Sie weisen zudem hervorragende Oberflächenbeschaffenheit auf; es sind keine Oberflächen-Rauhheiten vorhanden.
In den erfindungsgemäßen Schaumstoffbahnen und -platten ist die Menge an Treibmittel-Gehalt wesentlich geringer, sie liegt mehr als 30% niedriger, verglichen mit nach gleichen Fertigungsverfahren jedoch ohne die bei erfindungsgemäßen Produkten vorhandene Nadelperforierung gewonnenen Schaumstoff-produkten. Erfindungsgemäße Schaumstoff-Produkte haben darüber hinaus den Vorteil, daß deren "Reifeprozess" in wesentlich kürzeren Zeiten und ohne Verbrauch von Wärmeenergie erfolgt, beispielsweise statt (bisher) 14 Wochen bei 50^{o}C allenfalls eine "Reifezeit" von 1 Woche bei Umgebungstemperatur vorzusehen ist.

| Extrusions-Verfahrens-Parameter beim Verfahren der Beispiele 1, 2 und 3 | |
|---|---|
| Einspeisegeschwindigkeit in den Extruder | 60 - 350 kg/Stunde |
| Aufschmelztemperatur | 130 - 200^{o}C |
| Aufschmelzdruck | 65 - 210 bar |
| Zuführdruck für Treibmittelgas | 80 - 250 bar |
| Temperatur bei der Treibmittel-Einspeisung | 175^{o}C |
| Temperatur der geschmolzenen Masse vor dem Ausspritzen und Schäumen | 100 - 125^{o}C |
| Spritzdruck | 35 - 200 bar |
| Ausstossgeschwindigkeit | 250 kg/Std. - 4000 kg/Std. |
| Abzugsgeschwindigkeit von der Spritzdüse | 1 m/Min - 100 m/Min |
| Umgebungstemperatur im Ausspritzraum | 18^{o}C |
| Druck im Ausspritzraum | 1 Atm. |

**Tabelle 2**

| Eigenschaften der hergestellten Schaumstoff-Produkte | | | |
|---|---|---|---|
| | Beispiel 1 | Beispiel 2 | Beispiel 3 |
| Dicke der Schaumstoffbahn | 4 mm | 50 mm | 100 mm |
| Breite der Schaumstoffbahn | 2.00 m | 0,60 m | 0,60 m |
| Vernadelungsdichte | 5000 Nadeln/m² | 10000 Nadeln/m² | 20000 Nadeln/m² |
| Perforierungstiefe | 3,7 mm | 48 mm | 90 mm |

| Gehalt an Treibmittel (Butan) | | | |
|---|---|---|---|
| vor Vernadeln | 5,5% | 3,8% | 3,8% |
| unmittelbar nach dem Vernadeln | 3,5% | 2,5% | 2,7% |
| nach 1 Tag | 1,5% | 2,0% | 2,2% |
| nach 7 Tage | 1,4% | 1,8% | 1,8% |
| nach 2 Wochen | 1,3% | 1,2% | 1,3% |
| nach 7 Wochen | 1,2% | 1,1% | 1,2% |

| Gehalt an Butan | Vergleichsbeispiel 1 | Vergleichsbeispiel 2 | Vergleichsbeispiel 3 |
|---|---|---|---|
| unmittelbar nach Verfestigung | 5,5% | 3,8% | 3,8% |
| nach 1 Tag | 3,0% | 3,5% | 3,5% |
| nach 7 Tagen | 2,8% | 3,4% | 3,4% |
| nach 2 Wochen | 2.5% | 3,4% | 3,4% |
| nach 7 Wochen | 2,2% | 3,4% | 3,4% |

## Patentansprüche

1. Extrudierte und nach dem Extrudieren durch Nadeln vertikal teilperforierte bahnförmige Schaumstoffplatten aus mit halogenfreiem Kohlenwasserstoff und/oder CO₂ als Treibmittel verschäumtem Polyolefin, dadurch gekennzeichnet, dass die Perforation 1 bis 3 Stunden nach der Extrusion durchgeführt worden ist, wobei die Perforationstiefe 60% bis 96% der Plattendicke beträgt.

2. Schaumstoffplatten nach Anspruch 1, dadurch gekennzeichnet, daß die Vernadelungsdichte mindestens 4000 Nadeln pro m² der Plattenfläche beträgt.

3. Verfahren zur Herstellung von Schaumstoffplatten nach Anspruch 1 oder 2 auf einem Schneckenextruder, wobei ein schäumfähiges Gemisch auf Basis von Polyolefinen, das Treib- und Blähmittel in Form von CO₂ und/oder halogenfreiem Kohlenwasserstoff enthält, durch eine ringförmige oder flache Düse ins Freie gespritzt und die dabei schäumende Masse über Halteeinrichtungen abgezogen und eigenverfestigt wird, wobei danach das Schaumstoffplatten-Produkt einer Einstech-Einrichtung zugeführt und darin durch Nadeln teilperforiert wird, dadurch gekennzeichnet, daß die Perforation 1 bis 3 Stunden nach der Extrusion durchgeführt wird, wobei die Perforationstiefe 60% bis 96% der Plattendicke beträgt.

## Claims

1. Extruded an after extrusion perpendicularly and partially perforated needle-punched web-shaped foam boards of polyolefin that has been foamed with halogen-free hydrocarbon and/or CO₂ as the blowing agent, characterized in that the perforation has been accomplished 1 through 3 hours after extrusion and the depth of perforation is 60% to 96% of the board thickness.

2. Foam boards according to claim 1, characterized in that the needle-punching density is at least 4000 punches per square meter of board surface area.

3. A process for the production or foam boards of claims 1 or 2 using a screw extruder at which a foamable blend based on polyolefins and including CO₂ and/or halogen-free hydrocarbon as the blowing agent is extruded into the environment through a tubing die or a flat sheet die and the foaming mass is taken away by haul-off means and is solidified and then the foam board product is conducted through a punching arrangement and is partially perforated needle-punched there, characterized in that the perforation is accomplished 1 through 3 hours after extrusion and the perforation depth amounts to 60% to 96% of the board thickness.

## Revendications

1. Plaques de produit alvéolaire en forme de bande extrudées perforées verticalement partiellement après l'extrusion et formées de polyoléfine tranformée en mousse à l'aide d'un hydrocarbure libre d'halogène et/ou de CO₂ comme agent moussant, charactérisées en ce que la perforation a été réalisée une à trois heures après l'extrusion, la profondeur de perforation représentant 60 à 96 pourcent de l'épaisseur de la plaque.

2. Plaques de produit alvéolaire selon la revendication 1, charactérisées en ce que la densité des aiguilles est au moins 4000 aiguilles par m2 de surface de plaque.

3. Procédé pour fabriquer des plaques de produit alvéolaire selon la revendication 1 ou 2 à l'aide d'une extrudeuse à vis, selon lequel un mélange apte à la préparation de mousse sur la base de polyoléfines, le mélange contenant l'agent moussant ou soufflant sous forme de CO₂ et/ou d'hydrocarbure libre d'halogène, est projeté à travers une buse annulaire ou plate et la masse moussante est enlevée à l'aide de moyens de retenue et durcie par auto-durcissement, le produit alvéolaire en forme de plaques étant après amené à un moyen de perforation et y est perforé partiellement, caractérisé en ce que la perforation est exécutée une à trois heures après l'extrusion, la profondeur de perforation étant égale à 60 à 96 pourcent de l'épaisseur de plaque.
